# EUROPEAN PATENT SPECIFICATION

(11) **EP 2 969 419 B1**
(45) Date of publication and mention of the grant of the patent: **16.05.2018**
(21) Application number: 14712893.8
(22) Date of filing: 04.03.2014
(51) Int. Cl.: B32B 3/26, B29C 47/00, B26F 1/24, B29C 47/06, B29K 23/00, B32B 27/08, B32B 27/32, B29C 47/88, B26D 7/10, B26F 1/08, B26F 3/06

(54) **POLYMERIC MULTILAYER FILM AND METHODS TO MAKE THE SAME**
MEHRSCHICHTIGE POLYMERFOLIE UND VERFAHREN ZUR HERSTELLUNG DAVON
FILM MULTICOUCHE POLYMÈRE ET PROCÉDÉS POUR SA FABRICATION

(30) Priority: 12.03.2013 US 201361777517 P
(43) Date of publication of application: 20.01.2016
(73) Proprietor: 3M Innovative Properties Company, St. Paul, MN 55133-3427 (US)
(72) Inventor: SLAMA, David F., Saint Paul, Minnesota 55133-3427 (US); ANTILA, Garth V., Saint Paul, Minnesota 55133-3427 (US); FLANAGAN, Steven J., Saint Paul, Minnesota 55133-3427 (US); HANSEN, Brent R., Saint Paul, Minnesota 55133-3427 (US)
(74) Representative: Herzog, Fiesser & Partner Patentanwälte PartG mbB
(86) International application number: PCT/US2014/020295
(87) International publication number: WO 2014/164063

(56) References cited:
- WO-A1-2011/081894
- US-A1- 2004 070 100

## Description

### Cross Reference To Related Application

This application claims the benefit of U.S. Provisional Patent Application Number 61/777517, filed March 12, 2013, the disclosure of which is incorporated by reference herein in its entirety.

### Background

Perforated films are typically used in the personal hygiene field providing a fluid transfer film allowing the fluid to be removed from areas near to the skin and into the absorbent area. Other common applications are in the food packaging industry and more recently acoustics absorption. Perforated films for these applications are usually less than 100 micrometers (0.004 inch) thick (more typically less than 50 micrometers (0.002 inch) thick) and are made, for example, of olefins, polypropylene, or polyethylene.

Typical processing methods to produce perforated films include; vacuum drawing of film into a perforated panel or roll, use of pressurized fluid to form and puncture the film, needle punching with either cold or hot needles, or lasers to melt holes in the film. These processes, however, tend to have processing limitations such a hole size, hole density, and/or film thickness of film.

Vacuum or pressurized fluid forming of perforated films tends to be limited to relatively thin films (i.e., films less than 100 micrometers thick) due to the forces available to deform and puncture the film. Also materials used in this type of forming process tend to be limited to olefin-based polymers. Another characteristic of this type of process is the creation of a protrusion in the film where the film is stretched until a perforation is created. This protrusion can be an advantage in the case of fluid control where the protrusion can act as a directional flow control feature. However, it can also be a disadvantage in applications where a low pressure drop is desired. The protrusion creates an elongated hole thereby increasing the surface area and increase fluid drag.

Needle punching processes are also largely used for relatively thin films, but film thicknesses up to about 254 micrometers (0.010 inch) are sometimes seen. Limitations with this process tend to include perforation diameter holes per unit area, and protrusions in the film.

Laser perforation processes can provide relatively small holes (i.e., less than 50 micrometers), can perforate a wide range of thicknesses, can create perforations that are planar with the film surfaces (i.e., without the protrusions associated, for example, with needle punching processes). Limitations of laser perforation processes include the types of materials that suitable for the process, and processing speeds and costs. Laser perforation processes tend to be best suited for processing films from polyethylene terephthalate (PET), polyethylenenaphthalate (PEN), polycarbonate (PC), or other higher glass transition temperature materials. Lasers are often not very effective, for example, in perforating olefin-based materials.
PCT Pub. No. WO 2011/081894 A1 reports microperforated polymeric films comprising: opposed first and second surfaces separated by a first certain distance (40a); and a plurality of channels perpendicular to the first and second surfaces, wherein a first opening (20a-c) of a channel intersects the first surface and a second opening (22a-c) of the channel intersects the second surface; wherein the diameter of the first opening is larger than the diameter of the second opening and the second openings on the second surface are spaced apart by a second certain distance (50a); wherein the ratio of the first certain distance to the second certain distance is at least 0.25; and further wherein the second surface has an open area of at least 10 %. Also described are methods of making and using such microperforated polymeric films.

### Summary

In one aspect, the present disclosure describes a polymeric multilayer film having first and second generally opposed major surfaces, an array of openings extending between the first and second major surfaces, and a thickness greater than 125 micrometers (in some embodiments, greater than 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 125 micrometers to 1500 micrometers, or even 125 micrometers to 2500 micrometers), wherein there are at least 30 openings/cm² (in some embodiments, at least 100 openings/cm², 200 openings/cm², 250 openings/cm², 300 openings/cm², 400 openings/cm², 500 openings/cm², 600 openings/cm², 700 openings/cm², 750 openings/cm², 800 openings/cm², 900 openings/cm², 1000 openings/cm², 2000 openings/cm², 3000 openings/cm², or even least 4000 openings/cm²; in some embodiments, in a range from 30 openings/cm² to 200 openings/cm², 200 openings/cm² to 500 openings/cm², or even 500 openings/cm² to 4000 openings/cm²), and wherein the openings each have a series of areas through the openings from the first and second major surfaces ranging from minimum to maximum areas, and wherein the minimum area is not at at least one of the major surfaces.

In another aspect, the present disclosure describes a method of making a polymeric multilayer film described herein, the method comprising:
extruding at least two (in some embodiments, at least three, four, five, or more) polymeric layers into a nip to provide a polymeric multilayer film, wherein the nip comprises a first roll having a structured surface that imparts indentations through a first major surface of the polymeric multilayer film; and
passing the first major surface having the indentations over a chill roll while applying a heat source to a generally opposed second major surface of the polymeric multilayer film, wherein the application of heat from the heat source results in formation of openings to provide the polymeric multilayer film. In some embodiments, the method further comprises separating at least the first and second layers of the polymeric multilayer film having the openings.

In another aspect, the present disclosure describes a method of making a polymeric multilayer film, the method comprising:
extruding at least two (in some embodiments, at least three, four, five, or more) polymeric layers into a nip to provide a polymeric multilayer film, wherein the nip comprises a first roll having a structured surface that imparts indentations through a first major surface of the polymeric multilayer film;
separating at least the first and second layers of the polymeric multilayer films, wherein the first film layer has a second major generally opposed to the first major surface; and
passing the first major surface of the first film layer having the indentations over a chill roll while applying a heat source to the generally opposed second major surface of the first film layer, wherein the application of heat from the heat source results in formation of openings to provide a polymeric film having first and second generally opposed major surfaces and an array of openings extending between the first and second major surfaces.

Embodiments of polymeric multilayer film described herein are useful, for example, for filtration and acoustic absorption.

### Brief Description of the Drawings

FIG. 1 is a schematic of an exemplary polymeric multilayer film described herein.
FIG. 2, 2A, and 2B are schematics of an exemplary method for making exemplary polymeric multilayer film described herein.
FIGS. 3, 3A, and 3B are schematics of another exemplary method for making exemplary polymeric multilayer film described herein.

### Detailed Description

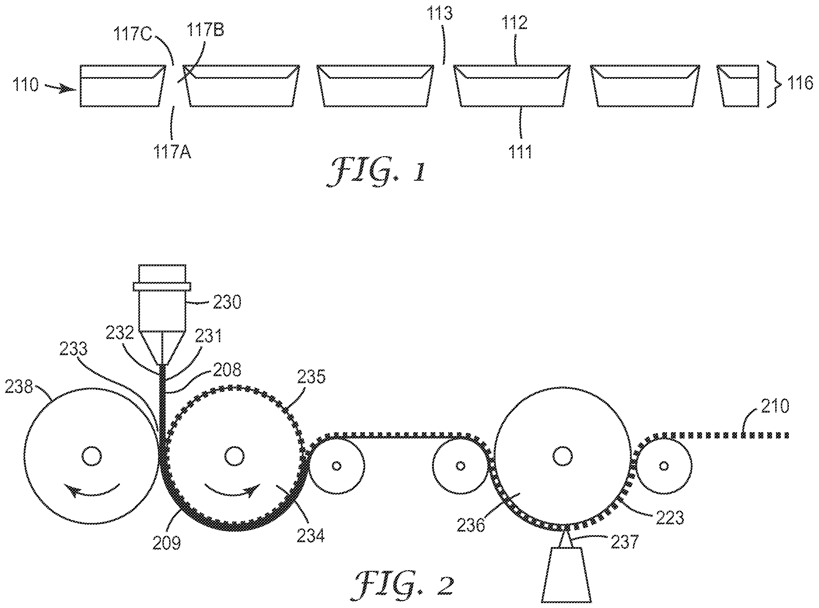

Referring to FIG. 1, exemplary polymeric multilayer film described herein 110 has first and second generally opposed major surfaces 111,112, array of openings 113 extending between first and second major surfaces 111, 112 and thickness 116. Openings 113 each have a series of areas 117A, 117B, 117C through openings 113 from first and second major surfaces 111, 112 ranging from minimum to maximum areas, wherein the minimum area is not at at least one of the major surfaces 111, 112.

Exemplary polymeric materials for making the polymeric multilayer films include polypropylene and polyethylene.

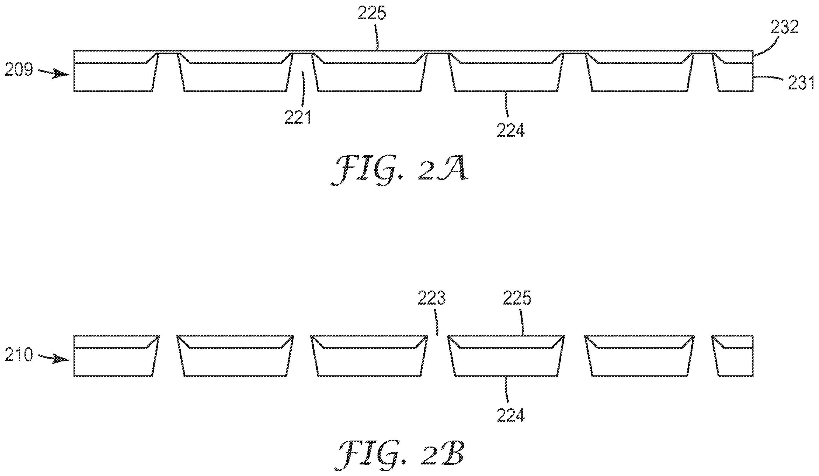

Polymeric multilayer films described herein can be made, for example, by methods described herein. For example, referring to FIGS. 2, 2A, and 2B, a schematic of an exemplary method is shown. At least first and second polymeric layers 231, 232 are extruded into nip 233 providing polymeric multilayer film 208. Nip 233 comprises first roll 234 having structured surface 235 that imparts indentations 221 through first major surface 224 of polymeric multilayer film 208 and roll 238 providing polymeric multilayer film 209. First major surface 224 of polymeric multilayer film 209 having indentations 221 is passed over chill roll 236 while applying heat source 237 to a generally opposed second major surface 225 of polymeric multilayer film 210. Application of heat from heat source 237 results in formation of openings 223 in polymeric multilayer film 210. Optionally, the method includes separating at least first and second layers 231, 232 of polymeric multilayer film 210 having openings 223.

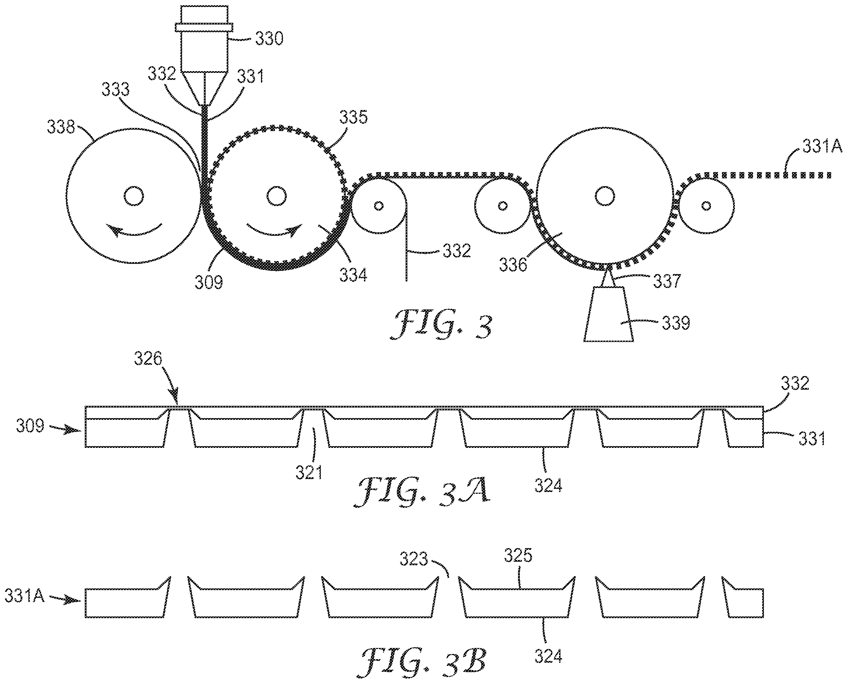

Another exemplary method is shown in FIGS. 3, 3A, and 3B. At least first and second polymeric layers 331, 332 are extruded into nip 333 providing polymeric multilayer film 309. Nip 333 comprises first roll 334 having structured surface 335 that imparts indentations 321 through first major surface 324 of polymeric multilayer film 309 and roller 338. Separating at least first and second layers 331, 332 of polymeric multilayer film 309. First major surface 324 of first film layer 331 having indentations 321 over chill roll 336 while applying heat source 337 to generally opposed second major surface 325 of first film layer 331. Application of heat from heat source 337 results in formation of openings 323 in polymeric film 331A having first and second generally opposed major surfaces 324, 325.

Optionally, any of the polymeric materials comprising an article described herein may comprise additives such as inorganic fillers, pigments, slip agents, and flame retardants.

Suitable extrusion apparatuses (including materials for making components of the apparatuses) for making multilayer films described herein should be apparent to those skilled in the art after reviewing the instant disclosure, including the working examples. For examples, the rolls (e.g., 234, 236, 238, 334, 336, 338) can made of metals such as steel. In some embodiments the surface of rolls contacting the polymeric material(s) are chrome plated, copper plated, or aluminum. Rolls can be chilled, for example using conventional techniques such as water cooling. Nip force can be provided, for example, by pneumatic cylinders.

Exemplary extrusion speeds include those in a range from 3-15 m/min. (in some embodiments, in a range from 15-50 m/min, 50-100 m/min., or more).

Exemplary extrusion temperatures are in range from 200°C-230°C (in some embodiments, in a range from 230°C-260°C, 260-300°C, or greater).

In some embodiments, the openings are greater than 25 micrometers (in some embodiments, greater than 50 micrometers, 75 micrometers, 100 micrometers. 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 25 micrometers to 1500 micrometers, or even 25 micrometers to 2500 micrometers) at the largest point.

In some embodiments, the openings have a largest dimension of not greater than 100 micrometers (in some embodiments, not greater than 250 micrometers, 500 micrometers, or 1000 micrometers; in some embodiments, in a range from 25 micrometers to 100 micrometers, 100 micrometers to 250 micrometers, 250 micrometers to 500 micrometers, or even 500 micrometers to 1000 micrometers).

The openings may be in any of a variety of shapes, including circles and ovals.

In some embodiments there are at least 30 openings/cm² (in some embodiments, at least 100 openings/cm², 200 openings/cm², 250 openings/cm², 300 openings/cm², 400 openings/cm², 500 openings/cm², 600 openings/cm², 700 openings/cm², 750 openings/cm², 800 openings/cm², 900 openings/cm², 1000 openings/cm², 2000 openings/cm², 3000 openings/cm², or even least 4000 openings/cm²; in some embodiments, in a range from 30 openings/cm² to 200 openings/cm², 200 openings/cm² to 500 openings/cm², or even 500 openings/cm² to 4000 openings/cm²).

In some embodiments of polymeric multilayer films described herein at least one of the layers comprises polypropylene and at least another of the layers comprises polyethylene.

In some embodiments of polymeric multilayer films herein having a flow resistance, as determined by the Flow Resistance Test, in a range from 250 rayls to 2150 rayls (in some embodiments, 650 rayls to 2150 rayls, or even 1250 rayls to 2150 rayls). The Flow Resistance Test is generally as described in ASTM Standard: C522-03 (2003) using the following procedure. The film to be tested was cut to a diameter slightly greater than the outer diameter of the flange of the top of the specimen holder which is 100 mm in diameter. The specimens to be tested are held in place with a clamping ring with grease on the flange to limit the porous part of the specimen to the inside diameter of the holder. Grease is also used to prevent the flow of air into the edges of the specimen. The specimen holder is then sealed to the mounting plate and the airflow adjusted to give readable settings on the flow meter and pressure measuring device. The air flow is linear air flow, and is typically in the range from 2-7 mm/sec. The differential pressure, P, the flow rate, U, and the calculated quotient, Flow Resistance, R = P/U are recorded. Five replicates are tested, using a larger airflow rate each time. If the apparent resistance increased in a steady way, the airflow is likely turbulent and the readings are to be discarded. A series of at least three measurements at well separated airflow velocities (25% recommended minimum differential) below the turbulent level are performed. The temperature range of the measurements is in a range from 21°C- 23°C. No adjustment is made for the barometric pressure.

Embodiments of polymeric multilayer film described herein are useful, for example, for filtration and acoustic absorption.

### Exemplary Embodiments

1. A polymeric multilayer film having first and second generally opposed major surfaces, an array of openings extending between the first and second major surfaces, and a thickness greater than 125 micrometers (in some embodiments, greater than 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 125 micrometers to 1500 micrometers, or even 125 micrometers to 2500 micrometers), wherein there are at least 30 openings/cm² (in some embodiments, at least 100 openings/cm², 200 openings/cm², 250 openings/cm², 300 openings/cm², 400 openings/cm², 500 openings/cm², 600 openings/cm², 700 openings/cm², 750 openings/cm², 800 openings/cm², 900 openings/cm², 1000 openings/cm², 2000 openings/cm², 3000 openings/cm², or even least 4000 openings/cm²; in some embodiments, in a range from 30 openings/cm² to 200 openings/cm², 200 openings/cm² to 500 openings/cm², or even 500 openings/cm² to 4000 openings/cm²), and wherein the openings each have a series of areas through the openings from the first and second major surfaces ranging from minimum to maximum areas, and wherein the minimum area is not at at least one of the major surfaces.
2. The polymeric multilayer film of Exemplary Embodiment 1, wherein the openings have a largest dimension of not greater than 100 micrometers (in some embodiments, not greater than 250 micrometers, 500 micrometers, or 1000 micrometers; in some embodiments, in a range from 25 micrometers to 100 micrometers, 100 micrometers to 250 micrometers, 250 micrometers to 500 micrometers, or even 500 micrometers to 1000 micrometers).
3. The polymeric multilayer film of any preceding Exemplary Embodiment, wherein at least one of the layers comprises polypropylene and at least another of the layers comprises polyethylene.
4. The polymeric multilayer film of any preceding Exemplary Embodiment herein having a flow resistance, as determined by the Flow Resistance Test, in a range from 250 rayls to 2150 rayls (in some embodiments, 650 rayls to 2150 rayls, or even 1250 rayls to 2150 rayls).
5. A method of making a polymeric multilayer film, the method comprising:
   extruding at least two polymeric layers into a nip to provide a polymeric multilayer film, wherein the nip comprises a first roll having a structured surface that imparts indentations through a first major surface of the polymeric multilayer film; and
   passing the first major surface having the indentations over a chill roll while applying a heat source to a generally opposed second major surface of the polymeric multilayer film, wherein the application of heat from the heat source results in formation of openings to provide the polymeric multilayer film of any preceding Exemplary Embodiment.
6. The method of Exemplary Embodiment 5 further comprising separating at least the first and second layers of the polymeric multilayer film having the openings.
7. A method of making a polymeric multilayer film, the method comprising:
   extruding at least two polymeric layers into a nip to provide a polymeric multilayer film, wherein the nip comprises a first roll having a structured surface that imparts indentations through a first major surface of the polymeric multilayer film;
   separating at least the first and second layers of the polymeric multilayer films, wherein the first film layer has a second major generally opposed to the first major surface; and
   passing the first major surface of the first film layer having the indentations over a chill roll while applying a heat source to the generally opposed second major surface of the first film layer, wherein the application of heat from the heat source results in formation of openings to provide a polymeric film having first and second generally opposed major surfaces and an array of openings extending between the first and second major surfaces.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1

A perforated multilayer polymeric film was prepared using the following procedures. A three layer polymeric film consisting of layers A, B and C was prepared using three extruders to feed a 25 cm wide 3 layer multi-manifold die (obtained under the trade designation "CLOEREN" from Cloeren, Inc., Orange TX). Layers A and B consisted of the same polymer (hereinafter referred to as layer "AB") and as a result essentially acted as one mono-layer combined with layer C following the extrusion process. The extrusion process was done vertically downward into a nip consisting of a tooling roll (334) and a smooth steel backup roll (338). The extrusion process was configured such that layer AB contacted the tooling roll (334) and layer C contacted the backup roll as shown schematically in FIG. 3. The polymer for layer A was provided with a 6.35 cm single screw extruder. The polymer for layer B was provided with a 6.35 cm single screw extruder. The polymer for layer C was provided with a 3.2 cm single screw extruder. Heating zone temperatures for the three extruders is shown in Table 1, below.

**Table 1**

| Heating Zones | 6.35 cm (2.5 inch) Layer A, °C | 6.35 cm (2.5 inch) Layer B, °C | 3.2 cm (1.25 inch) Layer C, °C | Die, °C |
|---|---|---|---|---|
| Zone 1 | 190 | 190 | 171 | 218 |
| Zone 2 | 204 | 204 | 177 | 218 |
| Zone 3 | 232 | 218 | 182 | 218 |
| Zone 4 | 232 | 218 | N/A | N/A |
| End cap | 232 | 218 | 182 | N/A |
| Neck Tube | 232 | 218 | 182 | N/A |

The rpms of the extruders are listed in Table 2, below.

**Table 2**

| | 6.35 cm (2.5 inch) Layer A | 6.35 cm (2.5inch) Layer B | 3.2 cm (1.25 inch) Layer C |
|---|---|---|---|
| Extruder rpm | 13.8 | 5 | 50 |

Layers AB were extruded using a polypropylene impact copolymer resin (obtained under the trade designation "DOW C700-35N 35 MFI" from Dow Chemical Company, Midland, MI). The basis weight for the combined layers AB (331) was 200 g/m². Layer C (332) was extruded using low density polyethylene (55 melt flow rate; obtained under the trade designation "DOW 959S" from Dow Chemical Company). The basis weight of layer C (332) was 82 g/m².

The two rolls comprising the nip were water cooled rolls (334, 338) with a nominal 30.5 cm in diameter and 40.6 cm face widths. Nip force was provided by pneumatic cylinders. The smooth steel backup roll (338) temperature set point of 38°C. The tooling roll (334) had male post features (335) cut into the surface of the roll. The male post features were chrome plated. The male features (defined as posts) (335) on the tool surface were flat square topped pyramids with a square base. The top of the posts were 94 micrometers square and the bases were 500 micrometers square. The overall post height was 914 micrometers. The center to center spacing of the posts was 820 micrometers in both the radial and cross roll directions. The tooling roll (334) had a temperature set point of 38°C. The tooling roll (334) and backup rolls (338) were directly driven. The nip force between the two nip rolls was 356 Newton per linear centimeter. The extrudate takeaway line speed was 3.66 m/min.

The polymers for the three layers were extruded from the die (330) directly into the nip (333) between the tooling (334) and backup roll (338). The male features (335) on the tooling roll (334) created indentations (321) in the extrudate. A thin layer of polymer (326) remained between the tooling (334) and backup roll (338). Typically this layer (326) was less than 20 micrometer thick. The extrudate remained on the tooling roll (334) for 180 degrees of wrap to chill and solidify the extrudate into a multi-layer polymeric film. Layer C (332) was then stripped apart from layers AB (331) and disposed of. Layers AB (331) were then wound into roll form.

The multi-layer polymeric film containing indentations was then converted into a perforated film using the following procedure. A flame perforation system as described in U.S. Pat. No. 7,037,100 (Strobel et. al.) utilizing the burner design from U.S. Pat. No. 7,635,264 (Strobel et. al.) was used to melt and remove the thin layer (326).

Specific modifications to the equipment and process conditions for this experiment were as follows:
The chill roll (336) was a smooth surface roll without an etched or engraved pattern.
The burner (339) was a 30.5 centimeter (12 inch) six port burner, anti howling design as described in U.S. Pat. No 7,635,264 (Strobel et. al.), the disclosure of which is incorporated by reference, and was obtained from Flynn Burner Corporation, New Rochelle, NY.
Unwind Tension: 178 Newton total tension
Winder Tension: 178 Newton total tension
Burner (339) BTU's 5118 BTU/cm/hour
1% excess oxygen
Gap between burner (339) and the film surface: 12 mm
Line Speed: 40 m/min.
Chill roll (336) cooling water set point: 15.5°C

The multilayer polymeric film was processed through the apparatus schematically shown in FIG. 3 at the above conditions. The web orientation was such that the side of the film (325) with the thin polymer layer (326) was closest to the burner (339) and opposite of the chill roll (336). The chill roll (336) cooled the main body of the film, keeping the majority of the film below the softening point of the polymer. Heat from the burner flame (337) caused the remaining thin polymer layer (326) to melt thereby creating the perforations (323) in the film.

## Claims

1. A polymeric multilayer film having first and second generally opposed major surfaces, an array of openings extending between the first and second major surfaces, and a thickness greater than 125 micrometers, wherein there are at least 30 openings/cm², and wherein the openings each have a series of areas through the openings from the first and second major surfaces ranging from minimum to maximum areas, and wherein the minimum area is not at at least one of the major surfaces.

2. The polymeric multilayer film of claim 1, wherein the openings have a largest dimension of not greater than 100 micrometers.

3. The polymeric multilayer film of any preceding claim, wherein at least one of the layers comprises polypropylene and at least another of the layers comprises polyethylene.

4. The polymeric multilayer film of any preceding claim herein having a flow resistance in a range from 250 rayls to 2150 rayls as determined by the Flow Resistance Test described in the Description based on ASTM Standard C522-03 (2003) with a linear air flow in a range from 2 to 7 mm/sec and a temperature in a range from 21°C to 23°C.

5. A method of making a polymeric multilayer film, the method comprising:
extruding at least two polymeric layers into a nip to provide a polymeric multilayer film, wherein the nip comprises a first roll having a structured surface that imparts indentations through a first major surface of the polymeric multilayer film; and
passing the first major surface having the indentations over a chill roll while applying a heat source to a generally opposed second major surface of the polymeric multilayer film, wherein the application of heat from the heat source results in formation of openings to provide the polymeric multilayer film of any preceding claim.

6. The method of claim 5 further comprising separating at least the first and second layers of the polymeric multilayer film having the openings.

7. A method of making a polymeric multilayer film, the method comprising:
extruding at least two polymeric layers into a nip to provide a polymeric multilayer film, wherein the nip comprises a first roll having a structured surface that imparts indentations through a first major surface of the polymeric multilayer film;
separating at least the first and second layers of the polymeric multilayer films, wherein the first film layer has a second major generally opposed to the first major surface; and
passing the first major surface of the first film layer having the indentations over a chill roll while applying a heat source to the generally opposed second major surface of the first film layer, wherein the application of heat from the heat source results in formation of openings to provide a polymeric film having first and second generally opposed major surfaces and an array of openings extending between the first and second major surfaces.

## Patentansprüche

1. Polymere mehrschichtige Folie mit einer ersten und zweiten im Allgemeinen gegenüberliegenden Hauptoberfläche, einer Gruppierung von Öffnungen, die zwischen der ersten und der zweiten Hauptoberfläche verlaufen und einer Dicke von mehr als 125 Mikrometern, wobei es mindestens 30 Öffnungen/cm² gibt und wobei die Öffnungen jeweils eine Folge von Flächen durch die Öffnungen von der ersten und zweiten Hauptoberfläche im Bereich von minimalen zu maximalen Flächen sind und wobei die minimale Fläche nicht an mindestens einer der Hauptoberflächen ist.

2. Polymere mehrschichtige Folie nach Anspruch 1, wobei die Öffnungen eine größte Abmessung von nicht mehr als 100 Mikrometern aufweisen.

3. Polymere mehrschichtige Folie nach einem der vorstehenden Ansprüche, wobei mindestens eine der Schichten Polypropylen umfasst und mindestens eine andere der Schichten Polyethylen umfasst.

4. Polymere mehrschichtige Folie nach einem der vorstehenden Ansprüche, die hierin einen Strömungswiderstand in einem Bereich von 250 Rayl bis 2150 Rayl aufweist, wie durch den Strömungswiderstandstest, der in der Beschreibung auf der Basis der ASTM-Norm C522-03 (2003) beschrieben ist, mit einem linearen Luftstrom in einem Bereich von 2 bis 7 mm/s und einer Temperatur in einem Bereich von 21 °C bis 23 °C bestimmt.

5. Verfahren zum Herstellen einer polymeren mehrschichtigen Folie, wobei das Verfahren Folgendes umfasst:
Extrudieren mindestens zwei polymerer Schichten in einen Walzenspalt, um eine polymere mehrschichtige Folie bereitzustellen, wobei der Walzenspalt eine erste Walze mit einer strukturierten Oberfläche umfasst, die Vertiefungen durch eine erste Hauptoberfläche der polymeren mehrschichtigen Folie verleiht; und
Führen der ersten Hauptoberfläche mit den Vertiefungen über eine Kühlwalze, während eine Wärmequelle auf eine im Allgemeinen gegenüberliegende zweite Hauptoberfläche der polymeren mehrschichtigen Folie angewendet wird, wobei die Anwendung von Wärme von der Wärmequelle zur Bildung von Öffnungen führt, um die polymere mehrschichtige Folie nach einem der vorstehenden Ansprüche bereitzustellen.

6. Verfahren nach Anspruch 5, ferner umfassend das Trennen mindestens der ersten und der zweiten Schicht der polymeren mehrschichtigen Folie, die die Öffnungen aufweist.

7. Verfahren zum Herstellen einer polymeren mehrschichtigen Folie, wobei das Verfahren Folgendes umfasst:
Extrudieren mindestens zwei polymerer Schichten in einen Walzenspalt, um eine polymere mehrschichtige Folie bereitzustellen, wobei der Walzenspalt eine erste Walze mit einer strukturierten Oberfläche umfasst, die Vertiefungen durch eine erste Hauptoberfläche der polymeren mehrschichtigen Folie verleiht;
Trennen von mindestens der ersten und zweiten Schicht der polymeren mehrschichtigen Folien, wobei die erste Folienschicht eine zweite Hauptoberfläche im Allgemeinen gegenüber der ersten Hauptoberfläche aufweist; und
Führen der ersten Hauptoberfläche der ersten Folienschicht mit den Vertiefungen über eine Kühlwalze, während eine Wärmequelle auf die im Allgemeinen gegenüberliegende zweite Hauptoberfläche der ersten Folienschicht angewendet wird, wobei die Anwendung von Wärme von der Wärmequelle zur Bildung von Öffnungen führt, um eine Polymerfolie bereitzustellen, die eine erste und eine zweite im Allgemeinen gegenüberliegende Hauptoberfläche und eine Gruppierung von Öffnungen, die zwischen der ersten und der zweiten Hauptoberfläche verlaufen, aufweist.

## Revendications

1. Film multicouche polymère ayant des première et deuxième surfaces principales généralement opposées, un réseau d'ouvertures s'étendant entre les première et deuxième surfaces principales, et une épaisseur supérieure à 125 micromètres, dans lequel il y a au moins 30 ouvertures/cm², et dans lequel les ouvertures ont chacune une série d'aires à travers les ouvertures des première et deuxième surfaces principales allant d'une aire minimale à une aire maximale, et dans lequel l'aire minimale n'est pas au niveau d'au moins une des surfaces principales.

2. Film multicouche polymère selon la revendication 1, dans lequel les ouvertures ont une dimension la plus grande ne dépassant pas 100 micromètres.

3. Film multicouche polymère selon une quelconque revendication précédente, dans lequel au moins l'une des couches comprend du polypropylène et au moins une autre des couches comprend du polyéthylène.

4. Film multicouche polymère selon une quelconque revendication précédente ici, ayant une résistance à l'écoulement dans une plage allant de 250 rayls à 2150 rayls telle que déterminée par le test de résistance à l'écoulement décrit dans la description sur la base de la norme ASTM C522-03 (2003) avec un flux d'air linéaire dans une plage allant de 2 à 7 mm/s et une température dans une plage allant de 21 °C à 23 °C.

5. Procédé de fabrication d'un film multicouche polymère, le procédé comprenant :
l'extrusion d'au moins deux couches polymères dans une ligne de contact pour fournir un film multicouche polymère, dans lequel la ligne de contact comprend un premier rouleau ayant une surface structurée qui confère des indentations à travers une première surface principale du film multicouche polymère ; et
le passage de la première surface principale ayant les indentations par-dessus un rouleau refroidisseur tout en appliquant une source de chaleur à une deuxième surface principale généralement opposée du film multicouche polymère, dans lequel l'application de chaleur à partir de la source de chaleur entraîne la formation d'ouvertures pour fournir le film multicouche polymère selon une quelconque revendication précédente.

6. Procédé selon la revendication 5, comprenant en outre la séparation au moins des première et deuxième couches du film multicouche polymère ayant les ouvertures.

7. Procédé de fabrication d'un film multicouche polymère, le procédé comprenant :
l'extrusion d'au moins deux couches polymères dans une ligne de contact pour fournir un film multicouche polymère, dans lequel la ligne de contact comprend un premier rouleau ayant une surface structurée qui confère des indentations à travers une première surface principale du film multicouche polymère ;
la séparation au moins des première et deuxième couches des films multicouches polymères, dans lequel la première couche de film a une deuxième surface principale généralement opposée à la première surface principale ; et
le passage de la première surface principale de la première couche de film ayant les indentations par-dessus un rouleau refroidisseur tout en appliquant une source de chaleur à la deuxième surface principale généralement opposée de la première couche de film, dans lequel l'application de chaleur à partir de la source de chaleur entraîne la formation d'ouvertures pour fournir un film polymère ayant des première et deuxième surfaces principales généralement opposées et un réseau d'ouvertures s'étendant entre les première et deuxième surfaces principales.
